Europäisches Patentamt

European Patent Office

Office européen des brevets

(19)

(11) Veröffentlichungsnummer: **0 237 905 B1**

(12) **EUROPÄISCHE PATENTSCHRIFT**

(45) Veröffentlichungstag der Patentschrift: **17.07.91**

(51) Int. Cl.⁵: **G01B 3/34**, G01B 5/08

(21) Anmeldenummer: **87103363.5**

(22) Anmeldetag: **09.03.87**

(54) **Messeinrichtung zur Ermittlung des Hüllzylinders von Präzisionsrundteilen.**

(30) Priorität: **21.03.86 DE 3609722**

(43) Veröffentlichungstag der Anmeldung:
**23.09.87 Patentblatt 87/39**

(45) Bekanntmachung des Hinweises auf die
Patenterteilung:
**17.07.91 Patentblatt 91/29**

(84) Benannte Vertragsstaaten:
**AT CH DE FR GB IT LI SE**

(56) Entgegenhaltungen:
**GB-A- 603 510**
**US-A- 1 477 534**
**US-A- 2 795 857**
**US-A- 4 543 725**

(73) Patentinhaber: **Siemens Aktiengesellschaft**
**Wittelsbacherplatz 2**
**W-8000 München 2(DE)**

(72) Erfinder: **Fuchs, Volker, Ing. grad.**
**Röntgenstrasse 34**
**W-8012 Ottobrunn(DE)**

## Beschreibung

Die Erfindung betrifft eine Meßeinrichtung zur Ermittlung des Hüllzylinders von Präzisionsrundteilen, insbesondere von Lichtwellenleiter-Steckerstiften, bestehend aus einem in mindestens zwei Meßbacken unterteilten Lehrring, einem peripheren Federgelenk als einstückige Verbindung zwischen den Meßbacken und einem Meßtaster zur Erfassung der Relativbewegungen zwischen den Meßbacken.

Bei der optischen Nachrichtenübertragung über Lichtwellenleiter werden die Lichtleitfasern über mechanische Steckerverbinder höchster Präzision so gekoppelt, daß die beiden signalführenden Faserkerne im Submikrometerbereich koaxial aufeinandertreffen und damit eine minimale Signaldämpfung gewährleisten. Daraus ergibt sich eine extrem hohe Anforderung an die Paßgenauigkeit von Steckerstiften und Steckerhülsen, wodurch sich Herstelltoleranzen für Durchmesser und Zylinderform im Submikrometerbereich ergeben, die weit jenseits der üblicherweise beherrschbaren Längenmeßtechnik liegen. Erschwerend kommt hinzu, daß die Fertigung genauso problematisch ist, so daß keine idealen und damit leichter meßbaren Prüfgegenstände vorliegen. Das bedeutet, daß die Meßmethode so praxisnah gewählt werden muß, daß funktionsunwichtige Unzulänglichkeiten der Steckerstifte nicht zu deren Ablehnung führen.

Bei den bisher gefertigten meist noch nicht so eng tolerierten Steckerkomponenten reichte die konventionelle Meßtechnik in verfeinerter Handhabung gerade noch aus. Für hochgenaue Teile wurden an wenigen Exemplaren aufwendige Messungen mit hochpräzisen Universalmeßgeräten eines Präzisionsmeßraumes durchgeführt oder versucht, mit bestmöglichen Lehren die Brauchbarkeit zu "erfühlen".

Eine praxisnahe Prüfung der Steckerstifte auf Steckbarkeit erfordert die Ermittlung der Hüllzylinder, d.h. des kleinstmöglichen einhüllenden Zylinders unter Berücksichtigung der Rundheits- und Geradheitsabweichungen. Dies ist am besten mit einer Prüfeinrichtung möglich, die dem Taylorschen Grundsatz entspricht, d. h. für die Gutprüfung muß jedem Flächenelement der Prüflingspaßfläche ein eigenes Flächenelement der Prüfeinrichtung gegenüberstehen. Dieser Grundsatz würde im Falle der Steckerstifte durch eine Prüfung mit Lehrringen erfüllt. Lehrringe sind jedoch nicht in der erforderlichen feinen Durchmesser-Abstufung erhältlich. Außerdem würden handelsübliche Lehrringe zu schnell verschleißen.

Aus der amerikanischen Patentschrift 4,543,725 ist ein Paßring bekannt, der zur Feststellung des äußeren Durchmessers von Gegenständen mit rotationssymmetrischer Oberfläche verwendbar ist.

Dies wird mittels zweier einstellbarer Fühler, die den zu vermessenden Gegenstand von zwei gegenüberliegenden Seiten abtasten, erreicht.

Aus der amerikanischen Patentschrift 1,477,534 ist ein Paßring bekannt, der aus mindestens zwei Meßbacken mit innenliegenden zylindrischen Meßflächen besteht und der mindestens ein peripheres Federgelenk als einstückige Verbindung zwischen den Meßbacken besitzt. Ein derartiger Paßring kann in seiner Größe bzw. in seinem inneren Durchmesser mittels mindestens zweier Schrauben genau eingestellt und fixiert werden. Somit ist ein einmal eingestellter Durchmesser fixiert und bleibt während der Messungen konstant.

Der Erfindung liegt die Aufgabe zugrunde, eine Meßeinrichtung zur Ermittlung des Hüllzylinders von Präzisionsrundteilen zu schaffen, die einerseits die Vorteile der Lehrung bezüglich des Taylorschen Grundsatzes noch größtenteils bewahrt und andererseits die Vorteile einer messenden Prüfung bietet.

Diese Aufgabe wird bei einer gattungsgemäßen Meßeinrichtung durch die kennzeichnenden Merkmale des Anspruchs 1 gelöst.

Der Erfindung liegt die Erkenntnis zugrunde, daß die gestellten Anforderungen durch eine gattungsgemäße Meßeinrichtung erzielbar sind, wobei die Meßbacken des Lehrringes innenliegende zylindrische Meßflächen aufweisen, deren Krümmungsradien nur geringfügig über dem des Prüfungsgegenstandes liegen. Eine erfindungsgemäße Meßeinrichtung könnte beispielsweise als Zweibackensystem oder als Dreibackensystem realisiert werden. An einer Meßbacke ist dabei ein Hebel zum Öffnen angebracht und gleichzeitig greift an dem Hebel eine Feder zur Erzeugung einer Vor-Meßkraft an. Die exakte Parallelität der Mittenachsen der zylindrischen Meßflächen, die notwendig ist, um das Taylorsche Meßprinzip zu gewährleisten, wird durch die Feder in Verbindung mit der Vormeßkraft erzielt.

Weitere vorteilhafte Ausgestaltungen der Erfindung sind in den abhängigen Ansprüchen angegeben.

Ausführungsbeispiele der Erfindung sind in der Zeichnung dargestellt und werden im folgenden näher beschrieben.

Es zeigen:

Fig. 1   eine Draufsicht auf eine als Zweibackensystem ausgebildete Meßeinrichtung,

Fig. 2   eine seitliche Ansicht auf den Hebel der in Fig. 1 dargestellten Meßeinrichtung,

Fig. 3   eine Draufsicht auf eine als Dreibackensystem ausgebildete Meßeinrichtung und

Fig. 4   einen Schnitt gemäß der Linie IV-IV der Fig. 3.

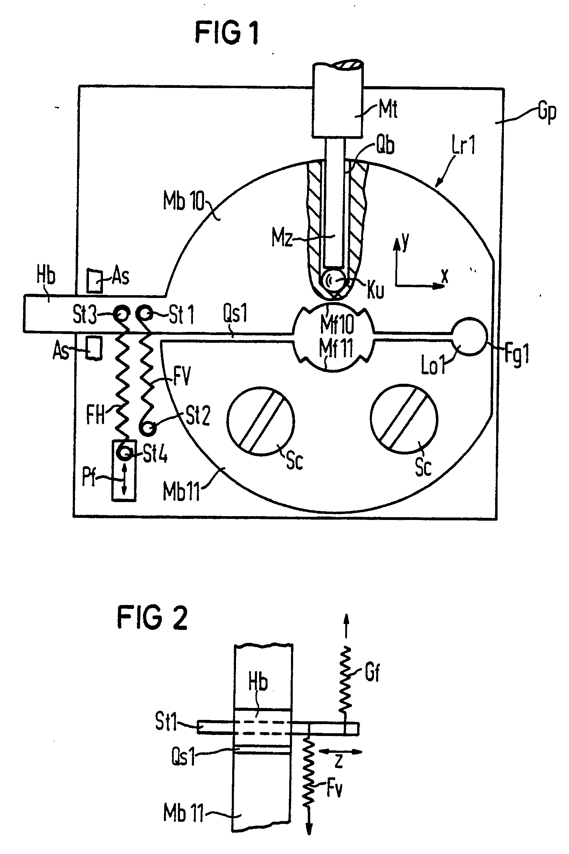

In Fig. 1 ist ein mit Lr1 bezeichneter Lehrring zu erkennen, der auf einer rechteckigen Grundplatte Gp angeordnet und durch einen Querschlitz Qs1 in zwei Meßbacken Mb10 und Mb11 unterteilt ist. Der untere Meßbacken Mb11 ist mit Hilfe von zwei Schrauben Sc mit der Grundplatte Gp fest verschraubt, wobei durch entsprechende Augen auf der Grundplatte Gp ein geringer Abstand gewährleistet ist. Der Querschlitz Qs1 endet in einem Loch Lo1, wobei das verbleibende Material zwischen diesem Loch Lo1 und dem hier abgeflachten Außenumfang des Lehrringes Lr1 ein Federgelenk Fg1 bildet. Die Meßbacken Mb10 und Mb11 sind somit durch das Federgelenk Fg1 einstückig miteinander verbunden, wobei durch diese einstückige Ausbildung Einspannungenauigkeiten vermieden werden und reproduzierbare Eigenschaften gewährleistet sind. In dem somit beweglichen oberen Meßbacken Mb10 ist in einer Querbohrung Qb eine Kugel Ku angeordnet, über welche die Backenbewegung auf den Meßbolzen Mz eines teilweise dargestellten Meßtasters Mt übertragen wird. Die hochgenau gefertigte Lehrenbohrung in der Mitte des Lehrringes Lr1 ist durch seitliche Aussparungen auf die zylindrischen Meßflächen Mf10 und Mf11 des beweglichen Meßbackens Mb10 bzw. des festen Meßbackens Mb11 reduziert. Die exakte Parallelität der Mittenachsen der beiden zylindrischen Meßflächen Mf10 und Mf11 ist durch eine mit FV bezeichnete jeder zur Erzeugung einer Vor-Meßkraft und gegebenenfalls durch eine in Fig. 2 dargestellte Gegenfeder Gf justierbar. Die Feder FV und die Gegenfeder Gf greifen an einem seitlichen Hebel Hb des beweglichen Meßbackens Mb10 an, wobei die Angriffspunkte auf einem Stift St1 in z-Richtung verschiebbar sind. Das andere Ende der Feder FV greift an einem in der Grundplatte Gp befestigten Stift St2 an. Die auf ähnliche Weise vorzunehmende Befestigung des anderen Endes der Gegenfeder Gf ist in der Zeichnung nicht näher dargestellt. Durch die Verschiebbarkeit der Angriffspunkte der Feder FV und der Gegenfeder Gf in z-Richtung wird neben der Vor-Meßkraft in y-Richtung ein kompensierendes Drehmoment um die x-Achse erzeugt. Zusätzlich zu der die Vor-Meßkraft erzeugenden Feder FV ist eine Feder FH zur Erzeugung der Haupt-Meßkraft vorgesehen, die zuschaltbar am Hebel Hb angreift. Im zugeschalteten Zustand greift diese Feder FH an einem Stift St3 des Hebels Hb und an einem entsprechend dem Pfeil Pf verstellbar mit der Grundplatte Gp verbundenen Stift St4 an. Zwei mit der Grundplatte Gp verbundene Anschläge As begrenzen den Hub des Hebels Hb und schützen somit das empfindliche Federgelenk Fg1 vor Überbeanspruchung.

Zur Messung wird der Prüfgegenstand zuerst unter der Vor-Meßkraft etwas gedreht, um ähnlich wie beim Anschieben von Endmaßen den unvermeidbaren Restschmutz abzuwischen. Danach wird die Haupt-Meßkraft zugeschaltet und der Meßwert am Anzeigegerät des Meßtasters Mt abgelesen.

Durch mehrere, über den Umfang verteilte Messungen kann bei Prüfgegenständen, die zu elliptischen Rundheitsabweichungen neigen, der Hüllzylinder als maximaler Meßwert ermittelt werden.

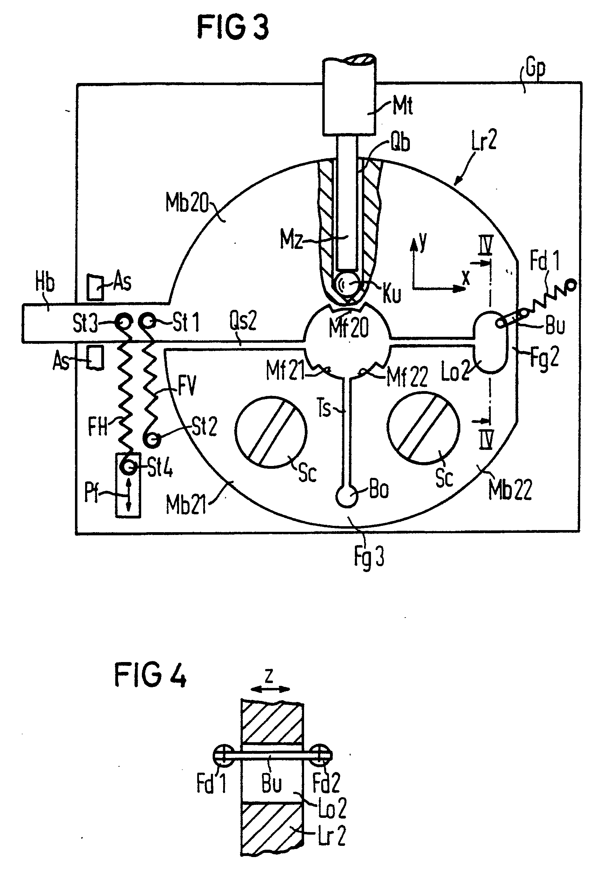

Bei Prüfgegenständen, deren Rundheitsabweichungen zu Gleichdickformen neigen, kann der Hüllzylinder nicht mehr über ein Zweibackensystem gemäß Fig. 1 erfaßt werden. In diesem Fall ist ein in Fig. 3 dargestelltes Dreibackensystem besser geeignet.

Die in Fig. 3 dargestellte und als Dreibackensystem ausgebildete Meßeinrichtung ist ähnlich aufgebaut wie das in Fig. 1 dargestellte Zweibackensystem, wobei gleiche Teile auch durch die gleichen Bezugszeichen gekennzeichnet sind.

Bei der in Fig. 3 dargestellten Meßeinrichtung sind der Lehrring mit Lr2, der obere bewegliche Meßbacken mit Mb20 und dessen zylindrische Meßfläche mit Mf20 bezeichnet. Der Querschlitz Qs2 endet in einem langlochförmigen Loch Lo2, welches ein als Biegebalken ausgebildetes Federgelenk Fg2 bildet. Die untere Meßbacke ist durch einen in eine Bohrung Bo einmündenden Trennschlitz Ts in Meßbacken Mb21 und Mb22 unterteilt, die durch Schrauben Sc fest mit der Grundplatte Gp verbunden sind und deren zylindrische Meßflächen mit Mf21 bzw. Mf22 bezeichnet sind. Zwischen der Bohrung Bo und dem Außenumfang des Lehrringes Lr2 ist ein weiteres Federgelenk Fg3 gebildet, welches die Meßbacken Mb21 und Mb22 einstückig miteinander verbindet. Durch eine nicht dargestellte Zusatzeinrichtung wird der Meßbacken Mb21 um wenige Mikrometer näher an den Meßbacken Mb22 angedrückt, wodurch sich die Mittenachsen der beiden zylindrischen Meßflächen Mf21 und Mf22 geringfügig überschneiden und damit eine prismenartige Auflage mit großflächigem Kontaktbereich entsteht. Da das Federgelenk Fg2 als Biegebalken ausgebildet ist, kann der obere bewegliche Meßbacken Mb20 über einen Bügel Bu und die gemäß Fig. 4 beidseitig angeordneten Federn Fd1 und Fd2 in eine Symmetrielage zu den Meßbacken Mb21 und Mb22 zurückgezogen worden. Die Angriffspunkte der Federn Fd1 und Fd2 sind in z-Richtung verschiebbar, d. h. der bewegliche Meßbacken Mb20 kann geringfügig um die y-Achse gedreht und damit die Mittenachse der zylindrischen Meßfläche Mf20 justiert werden. Alle anderen Teile entsprechen der in den Fig. 1 und 2 dargestellten Ausführung.

Die beiden vorstehend anhand der Fig. 1 und 2 bzw. 3 und 4 beschriebenen Meßeinrichtungen können als zusätzliche Meßeinrichtungen in der Länge der zylindrischen Meßflächen verkürzt und gegebenenfalls auch mit schmäleren Meßbacken versehen werden. Damit ist auch die Gegenprüfung nach Taylor möglich, d. h., es kann die Stelle mit dem kleinsten Außendurchmesser gesucht und damit auf die als Differenz zum Hüllzylinder gemessene Zylinderformabweichung der Prüfgegenstände geschlossen werden. Ferner ist es auch zweckmäßig, die zylindrischen Meßflächen durch verschleißhemmende Hartmetalleinsätze zu bilden.

**Patentansprüche**

1. Meßeinrichtung zur Ermittlung des Hüllzylinders von Präzisionsrundteilen, insbesondere von Lichtwellenleiter-Steckerstiften, bestehend aus:
   - einem in mindestens zwei Meßbacken (Mb10, Mb11; Mb20, Mb21, Mb22) unterteilten Lehrring (Lr1; Lr2),
   - einem peripheren Federgelenk (Fg1; Fg2) als einstückige Verbindung zwischen den Meßbacken (Mb10, Mb11; Mb20, Mb21, Mb22),
   - einem Meßtaster (Mt) zur Erfassung der Relativbewegungen zwischen den Meßbacken (Mb10, Mb11; Mb20, Mb21, Mb22),
   **dadurch gekennzeichnet**, daß
   - die Meßbacken (Mb10, Mb11; Mb20, Mb21, Mb22) des Lehrringes (Lr1; Lr2) innenliegende zylindrische Meßflächen (Mf10, Mf11; Mf20, Mf21, Mf22) aufweisen.
   - an eine Meßbacke (Mb10, Mb11; Mb20, Mb21) ein Hebel (Hb) zum Öffnen der Meßbacken angebracht ist,
   - an dem Hebel (Hb) eine Feder (FV) zur Erzeugung einer Vor-Meßkraft angreift,
   - die exakte Parallelität der Mittenachsen der zylindrischen Meßflächen (Mf10, Mf11; Mf20, Mf21, Mf22) durch die Feder (FV) zur Erzeugung der Vor-Meßkraft justierbar ist.

2. Meßeinrichtung nach Anspruch 1, dadurch **gekennzeichnet**, daß zusätzlich zur Feder (FV) eine Gegenfeder (Gf) zur exakten Justierung der Parallelität der Mittenachse zu den zylindrischen Meßflächen (Mf10, Mf11; Mf20, Mf21, Mf22) vorhanden ist.

3. Meßeinrichtung nach einem der vorhergehenden Ansprüche, **dadurch gekennzeichnet,** daß eine Feder (FH) zur Erzeugung einer Haupt-Meßkraft zuschaltbar am Hebel (Hb) angreift.

4. Meßeinrichtung nach einem der vorhergehenden Ansprüche, **dadurch gekennzeichnet,** daß die Hubbewegung des Hebels (Hb) durch seitlich angeordnete Anschläge (As) begrenzt ist.

5. Meßeinrichtung nach einem der vorhergehenden Ansprüche, **dadurch gekennzeichnet,** daß der Lehrring (Lr1; Lr2) durch einen in ein Loch (Lo1; Lo2) einmündenden Querschlitz (QS1; Qs2) geteilt ist, wobei das verbliebene Material zwischen dem Loch (Lo1; Lo2) und dem Außenumfang des Lehrringes (Lr1; Lr2) das Federgelenk (Fg1; Fg2) bildet.

6. Meßeinrichtung nach einem der vorhergehenden Ansprüche, **dadurch gekennzeichnet,** daß eine Meßbacke (Mb11; Mb21; Mb22) fest mit einer in geringem Abstand angeordneten Grundplatte (Gp) verschraubt ist und daß in einer Querbohrung (Qb) der anderen beweglichen Meßbacke (Mb10; Mb20) eine Kugel (Ku) angeordnet ist, über welche die Backenbewegung auf den Meßbolzen (Mz) des Meßtasters (Mt) übertragbar ist.

7. Meßeinrichtung nach Anspruch 6, **dadurch gekennzeichnet,** daß die mit der Grundplatte (Gp) verschraubte Meßbacke in zwei durch ein weiteres peripheres Federgelenk (Fg3) einstückig miteinander verbundene Meßbacken (Mb21, Mb22) unterteilt ist.

8. Meßeinrichtung nach Anspruch 7, dadurch **gekennzeichnet,** daß die mit der Grundplatte (Gp) verschraubte Meßbacke durch einen in eine Bohrung (Bo) einmündenden Trennschlitz (Ts) unterteilt ist, wobei das verbleibende Material zwischen der Bohrung (Bo) und dem Außenumfang des Lehrringes (Lr2) das weitere Federgelenk (Fg3) bildet.

9. Meßeinrichtung nach einem der Ansprüchen 7 oder 8 **dadurch gekennzeichnet,** daß das Loch (Lo2) in welches der Querschlitz (Qs2) einmündet langlochförmig ausgebildet ist.

10. Meßeinrichtung nach Anspruch 9, **dadurch gekennzeichnet,** daß die Symmetrielage der beweglichen Meßbacke (Mb20) zu den fest angeordneten Meßbacken (Mb21, Mb22) durch mindestens eine an der beweglichen Meßbacke (Mb20) angreifende Feder (Fd1, Fd2) justierbar ist.

11. Meßeinrichtung nach Anspruch 10, **dadurch gekennzeichnet,** daß die Mittenachse der zylindrischen Meßfläche (Mf20) der beweglichen Meßbacke (Mb20) durch zwei auf gegenüberliegenden Seiten der beweglichen Meßbacke (Mb20) angreifende Federn (Fd1, Fd2) justierbar ist.

## Claims

1. Measuring device for determining the external cylinder of precision round pieces, preferably of optical wave guide plug pins consisting of:
   - a gauge ring (Lr1; Lr2) divided into at least two measuring jaws (Mb10, Mb11; Mb20, Mb21, Mb22),
   - a peripheral spring joint (Fg1; Fg2) as a onepiece connection between the measuring jaws (Mb10, Mb11; Mb20, Mb21, Mb22),
   - a measuring sensor (Mt) for detecting relative movements between the measuring jaws (Mb10, Mb11; Mb20, Mb21, Mb22),
   characterised in that
   - the measuring jaws (Mb10, Mb11; Mb20, Mb21, Mb22) of the gauge ring (Lr1; Lr2) have internal cylindrical measuring surfaces (Mf10, Mf11; Mf20, Mf21, Mf22),
   - a lever (Hb) for opening the measuring jaws is mounted on a measuring jaw (Mb10, Mb11; Mb20, Mb21),
   - a spring (FV) for generating a pre-measuring force engages on the lever (Hb),
   - the exact parallelism of the centre axes of the cylindrical measuring surfaces (Mf10, Mf11; Mf20, Mf21, Mf22) is adjustable by means of the spring (FV) for generating the pre-measuring force.

2. Measuring device according to Claim 1, characterised in that, in addition to the spring (FV), a co-operating spring (Gf) for the precise adjustment of the parallelism of the centre axis with respect to the cylindrical measuring surfaces (Mf10, Mf11; Mf20, Mf21, Mf22) is present.

3. Measuring device according to one of the preceding claims, characterised in that a spring (FH) for generating a main measuring force engages on the lever (Hb) being connectable thereto.

4. Measuring device according to one of the preceding claims, characterised in that the lifting motion of the lever (Hb) is limited by laterally arranged stops (As).

5. Measuring device according to one of the preceding claims, characterised in that the gauge ring (Lr1; Lr2) is divided by a transverse slot (Qs1; Qs2) which leads into a hole (Lo1; Lo2), the remaining material between the hole (Lo1; Lo2) and the outer circumference of the gauge ring (Lr1; Lr2) forming the spring joint (Fg1; Fg2).

6. Measuring device according to one of the preceding claims, characterised in that a measuring jaw (Mb11; Mb21; Mb22) is screwed securely to a baseplate (Gp) arranged at a small distance, and in that a ball (Ku) is arranged in a transverse bore (Qb) of the other movable measuring jaw (Mb10; Mb20), via which ball the jaw motion can be transmitted to the measuring pin (Mz) of the measuring sensor (Mt).

7. Measuring device according to Claim 6, characterised in that the measuring jaw screwed to the baseplate (Gp) is divided into two measuring jaws (Mb21, Mb22) connected to one another as one piece by a further peripheral spring joint (Fg3).

8. Measuring device according to Claim 7, characterised in that the measuring jaw screwed to the baseplate (Gp) is divided by a separating slot (Ts) which leads into a bore (Bo), the remaining material between the bore (Bo) and the outer circumference of the gauge ring (Lr2) forming the further spring joint (Fg3).

9. Measuring device according to one of Claims 7 or 8, characterised in that the hole (Lo2) into which the transverse slot (Qs2) leads has the shape of an elongate hole.

10. Measuring device according to Claim 9, characterised in that the symmetrical position of the movable measuring jaw (Mb20) with respect to the securely arranged measuring jaws (Mb21, Mb22) is adjustable by means of at least one spring (Fd1, Fd2) which engages on the movable measuring jaw (Mb20).

11. Measuring device according to Claim 10, characterised in that the centre axis of the cylindrical measuring surface (Mf20) of the movable measuring jaw (Mb20) is adjustable by means of two springs (Fd1, Fd2) which engage on opposite sides of the movable measuring jaw (Mb20).

## Revendications

1. Dispositif de mesure pour déterminer le cylindre externe de pièces cylindriques de précision, notamment de chevilles de raccordement de fibres optiques, constitué :

- d'un calibre en forme de bague (Lr1 ; Lr2) subdivisé en au moins deux mâchoires de mesure (Mb10, Mb11 ; Mb20, Mb21, Mb22),
- d'une articulation élastique périphérique (Fg1 ; Fg2) constituant une liaison monobloc entre les mâchoires de mesure (Mb10, Mb11 ; Mb20, Mb21, Mb22),
- d'un palpeur de mesure (Mt) destiné à détecter les mouvements entre les mâchoires de mesure (Mb10, Mb11 ; Mb20, Mb21, Mb22),

caractérisé en ce que,

- les mâchoires de mesure (Mb10, Mb11 ; Mb20, Mb21, Mb22) du calibre en forme de bague (Lr1 ; Lr2) comportent des surfaces de mesure intérieures (Mf10, Mf11 ; Mf20, Mf21, Mf22) qui sont cylindriques,
- un levier (Hb) destiné à ouvrir les mâchoires de mesure est monté sur l'une des mâchoires de mesure (Mb10, Mb11 ; Mb20, Mb21, Mb22),
- un ressort (Fv) destiné à produire une force préalable de mesure attaque le levier (Hb),
- le parallélisme précis des axes médians des surfaces de mesure cylindriques (Mf10, Mf11 ; Mf20, Mf21, Mf22) est susceptible d'être ajusté par le ressort (Fv) destiné à produire la force préalable de mesure.

2. Dispositif de mesure suivant la revendication 1, caractérisé en ce qu'il est prévu, en plus du ressort (Fv), un ressort antagoniste (Gf) pour ajuster avec précision le parallélisme des axes médians des surfaces de mesure (Mf10, Mf11 ; Mf20, Mf21, Mf22) cylindriques.

3. Dispositif de mesure suivant l'une des revendications précédentes, caractérisé en ce qu'un ressort (FH), destiné à produire une force principale de mesure, est susceptible d'attaquer en plus le levier (Hb).

4. Dispositif de mesure suivant l'une des revendications précédentes, caractérisé en ce que la course du levier (Hb) est limitée par des butées (As) disposées latéralement.

5. Dispositif de mesure suivant l'une des revendications précédentes, caractérisé en ce que le calibre en forme de bague (Lr1 ; Lr2) est subdivisé par une fente transversale (QS1 ; QS2), débouchant dans un trou (Lo1 ; Lo2), le matériau subsistant entre le trou (Lo1 ; Lo2) et la périphérie extérieure du calibre en forme de bague (Lr1 ; Lr2) formant l'articulation élastique (Fg1 ; Fg2).

6. Dispositif de mesure suivant l'une des revendications précédentes, caractérisé en ce qu'une mâchoire de mesure (Mb11 ; Mb21 ; Mb22) est vissée solidement à une plaque de base (Gp) disposée à une faible distance, et en ce que, dans un perçage transversal (Qb) de l'autre mâchoire de mesure (Mb10 ; Mb20) mobile, est logée une bille (Ku) par laquelle le mouvement de la mâchoire peut être transmis au doigt de mesure (Mz) du palpeur de mesure (Mt).

7. Dispositif de mesure suivant la revendication 6, caractérisé en ce que la mâchoire de mesure vissée à la plaque de base (Gp) est subdivisée en deux mâchoires de mesure (Mb21, Mb22) reliées l'une à l'autre d'une pièce par une seconde articulation périphérique et élastique (Fg3).

8. Dispositif de mesure suivant la revendication 7, caractérisé en ce que la mâchoire de mesure vissée à la plaque de base (Gp) est subdivisée par une fente de séparation (Ts) débouchant dans un perçage (Bo), le matériau subsistant entre le perçage (Bo) et la périphérie extérieure du calibre en forme de bague (Lr2) formant la seconde articulation élastique (Fg3).

9. Dispositif de mesure suivant l'une des revendications 7 ou 8, caractérisé en ce que le trou (Lo2), dans lequel débouche la fente transversale (Qs2), est de forme oblongue.

10. Dispositif de mesure suivant la revendication 9, caractérisé en ce que la position de symétrie de la mâchoire de mesure (Mb20) mobile, par rapport aux mâchoires de mesure fixes (Mb21, Mb22), est susceptible d'être ajustée par au moins un ressort (Fd1, Fd2) attaquant la mâchoire de mesure mobile (Mb20).

11. Dispositif de mesure suivant la revendication 10, caractérisé en ce que l'axe médian de la surface de mesure cylindrique (Mf20) de la mâchoire de mesure mobile (Mb20) est susceptible d'être ajusté par deux ressorts (Fd1, Fd2) attaquant des côtés opposés de la mâchoire de mesure mobile (Mb20).

# FIG 1

# FIG 2

# FIG 3

# FIG 4